# EUROPEAN PATENT APPLICATION

(11) **EP 4 715 242 A1**
(43) Date of publication of application: **25.03.2026**
(21) Application number: 24200970.2
(22) Date of filing: 18.09.2024
(51) Int. Cl.: F16K 1/20, F16K 15/03, F16K 27/02

(54) **CHECK VALVE**

(71) Applicant: MANN+HUMMEL GmbH, 71636 Ludwigsburg (DE)
(72) Inventor: ZBIRAL, Robert, 71636 Ludwigsburg (DE); JESSBERGER, Thomas, 71636 Ludwigsburg (DE); EVLEKLI, Coskun, 71636 Ludwigsburg (DE); EHRLE, Maximilian, 71636 Ludwigsburg (DE)
(74) Representative: Mann + Hummel Intellectual Property

(57) **Abstract**

A check valve (10) comprises a housing (12) configured to be arranged entirely within a fluid line (70), the housing (12) comprising an outer surface (14) configured to be connected to an inside of the fluid line (70) in a fluid tight manner, and an inner flow region comprising an inflow region (20) and an outflow region (22), a valve seat (24) arranged between the inflow region (20) and the outflow region (22), and a flap (26) mounted to the housing (12) and pivotable about a rotational axis (Y) between a closed state and an open state of the flap (26), the flap (26) comprising a first side (16) facing the inflow region (20) in the closed state of the flap (26) and comprising a second side (18) opposite to the first side (16). The flap (26) is configured to in the closed state, be received by the valve seat (24), and in the open state, enable flow through the check valve (10) from the inflow region (20) to the outflow region (22) along a flow direction (X).

## Description

### Technical Field

Embodiments relate to a check valve.

### Background Art

Valves are used in fluid circuits to fulfill different functions. Generally, essential requirements are a high degree of robustness, good tightness in a closed state in order to avoid leakage losses of the fluid and a low pressure loss in the open state in order to obstruct the flow of the fluid the less possible. Valves known from state of the art with a rotatable flap are often used for this purpose.

US399390 discloses a flap valve for a drain pipe of a wash basin, wherein the contour of the flap has a convex shape and is precisely adapted to a correspondingly shaped surface on the pipe to be closed. Due to the connection of the two pipe sections by means of a thread, the correspondingly shaped surface on the tube to be closed must be rotationally symmetrical which at least limits the contour of the flap, which must be rotationally symmetrical as the contact surface must not be dependent on the end state of the screwed pipe section.

Further, JP 2000157805 A discloses an oil filter with a valve disk inside the oil filter. An oil inlet valve is provided that has a movable part to allow the oil to pass through to the oil outlet from a certain pressure on without flowing through the oil filter. Described is an oil pressure relief valve that is formed in one piece with a plate-shaped fastening clip punched from a single sheet of metal and the spring plate. The valve can be equipped with the clip-shaped plate spring and a valve body section that is integrated with the fixed section and has a preferably convex shape and a semi-circular consisting of a ring that protrudes from a flat surface.

### Summary

It is an object of the embodiments to provide an improved check valve.

According to an aspect of the embodiments the object is achieved by a check valve comprising a housing configured to be arranged entirely within a fluid line, the housing comprising an outer surface configured to be connected to an inside of the fluid line in a fluid tight manner, and an inner flow region comprising an inflow region and an outflow region. The check valve further comprises a valve seat arranged between the inflow region and the outflow region, and a flap mounted to the housing and pivotable about a rotational axis between a closed state and an open state of the flap, the flap comprising a first side facing the inflow region in the closed state and comprising a second side opposite to the first side. The flap is configured to, in the closed state, be received by the valve seat, and in the open state, enable flow through the check valve from the inflow region to the outflow region along a flow direction. The flap further comprises a rotary bearing arranged in the outflow region, and a return spring arranged at the second side of the flap in a region of the rotary bearing and exerting a force on the flap in a direction of the closed state, the return spring being a symmetrical double leg spring comprising two resting legs supported at the housing.

Advantageous embodiments are described in the dependent claims, the description and the drawings.

The proposed check valve advantageously offers a low pressure loss and mechanical robustness so that it can also be used in fluids with high flow velocities, high turbulence and pressure pulsations.

The flap is provided with a circumferential seal for optimum sealing against a sealing surface of the housing in the closed state, the sealing surface of the housing preferably being designed as a flat surface perpendicular to a rotational axis of the inner contour of the flow channel, and with a constant height of the sealing contour. The flap has a corresponding plane which, when closed, is parallel to the valve seat when the seal is ideally compressed.

The sealing contour on the flap is essentially symmetrical to a common plane of symmetry of the housing and the flap, which is perpendicular to the housing sealing surface and passes through the rotational axis of the inner contour of the flow channel.

Mounting of the rotational axis for the flap on the housing and on the flap is perpendicular to the plane of symmetry and at a distance from the sealing surface and thus also at a distance from the corresponding plane at a defined distance from the rotational axis of the inner contour of the flow channel, i.e. positioned off-center.

A double leg spring with optimized contact and guidance of the resting legs of the spring, the lever arms and also the bridge of the spring, which absorbs and introduces the forces of the dynamic flow, whereby the spring is designed symmetrically to the plane of symmetry.

An opening angle of the spring and thus the maximum bending in the area of elastic deformation of the spring is strongly limited.

The circumferential seal is protected by means of a raised area running inside the seal area that is higher than the seal all the way around.

Advantageously, a flow-optimized design of the flap is achieved to eliminate secondary flow that would lead to additional mechanical loads and pressure losses. The flow-optimized design of the flap significantly reduces and largely eliminates direct flow and the associated stress on the seal without significantly increasing the pressure loss of the flow.

According to the embodiments of the check valve, the housing may further comprise lateral guidance elements for the two resting legs of the symmetrical double leg spring. Large contact surface and lateral guidance on both sides of the two resting legs of the symmetrical double leg spring for optimum support and force transmission of the spring into the housing may be achieved.

According to the embodiments of the check valve, the flap may further comprise double-sided guidance elements for two lever arms of the symmetrical double leg spring. Lateral guidance of the two lever arms of the symmetrical double leg spring on both sides for optimum lateral support may be achieved.

According to the embodiments of the check valve, the flap may further comprise a supporting surface arranged at the second side of the flap. The symmetrical double leg spring may further comprise a bridge connecting two lever arms of the symmetrical double leg spring, the bridge being supported at the supporting surface. The largest possible contact surface and positioning of the bridge for optimum force transmission of the forces acting on the spring via the flap, caused by the flow of the medium, may be achieved.

According to the embodiments of the check valve, the check valve may further comprise at least one positioning element arranged at the supporting surface. The bridge of the symmetrical double leg spring may be positioned in the at least one positioning element. The largest possible contact surface and positioning of the bridge for optimum force transmission of the forces acting on the spring via the flap, caused by the flow of the medium, may be achieved.

According to the embodiments of the check valve, the flap may further comprise a seal arranged on a circumference of the first side of the flap. Advantageous sealing of the flap against the valve seat of the housing may thus be achieved.

According to the embodiments of the check valve, the seal may be form-fitting on the first side of the flap. The seal may be at least partly penetrating the flap. Advantageous contact for robust fixation of the seal with the flap may thus be achieved.

According to the embodiments of the check valve, the first side of the flap may comprise a planar surface spaced apart from a corresponding plane of the flap to form a raised contour inside the seal, the raised contour being configured to protect the seal from damage due to improper handling. Easy manufacturing of the flap is possible.

According to the embodiments of the check valve, the first side of the flap may comprise a guiding surface comprising a raised contour protruding from the first side in a central region of the flap, the raised contour being configured to guide a fluid flow away from the seal.

Thus the flap may be configured with a raised contour running inside the seal, which protects the seal from damage due to improper handling, especially during transportation and assembly of the flap as a single individual part.

According to the embodiments of the check valve, the contour may be shaped according to a concave start contour line defined on a plane substantially perpendicular to a corresponding plane of the flap, parallel to the rotational axis, and close to the rotary bearing, and according to a convex end contour line away from the rotary bearing and with a straight transition line in between the concave start contour line and convex end contour line.

According to the embodiments of the check valve, the flap may further comprise a solid portion arranged between the rotary bearings and configured to prevent a fluid flow from streaming below the flap.

Advantageously, a flow-optimized flap may be achieved in which the flow-relevant area of the flap between the two bearings for the rotational axis is completely closed to avoid a secondary flow that would cause an additional pressure loss.

The height of this raised contour may be such that the seal on the flap is almost completely protected by this geometry even when the flap is fully open and is therefore largely unaffected by the fluid flow and only subject to a small localized load.

According to the embodiments of the check valve, the second side of the flap may comprise at least one stop element configured to, in the open state of the flap, limit a rotation angle of the flap by being supported at the housing. Thus, a stop on both sides of the flap against the housing may be provided, which limits the angle of rotation of the flap and thus the load as a bending stress on the spring.

### Brief Description of Drawings

The embodiments together with the above-mentioned and other objects and advantages may best be understood from the following detailed description of the embodiments, but not restricted to the embodiments.
Figure 1 shows a check valve according to embodiments of the invention in an open state, in an isometric view from a second side.
Figure 2 shows the check valve according to Fig. 1, in an isometric view from the first side.
Figure 3 shows the check valve according to Fig. 1 in a plane view from the second side with a section plane B1-B1.
Figure 4 is a sectional view of the check valve in section plane B1-B1 according to Fig. 3.
Figure 5 shows a check valve according to further embodiments of the invention in an open state, in an isometric view from a second side.
Figure 6 shows the check valve according to Fig. 5, in an isometric view from the first side.
Figure 7 shows the check valve according to Fig. 5 in a plane view from the second side with a section plane B1-B1.
Figure 8 is a sectional view of the check valve in section plane B1-B1 according to Fig. 7.
Figure 9 shows the check valve according to Fig. 5 in a plane view from the first side with a section plane A1 -A1.
Figure 10 is a sectional view of the check valve in section plane A1-A1 according to Fig. 9 with a detail X.
Figure 11 is detail X of the sectional view of the check valve according to Fig. 10.
Figure 12 shows the flap of the check valve according to Fig. 5, in an isometric view from a second side.
Figure 13 shows the flap according to Fig. 12 in an isometric view from a first side.
Figure 14 shows the flap according to Fig. 12 in a further isometric view.
Figure 15 is a sectional view of the flap according to Fig. 12 with section planes C1-C1 and D1-D1.
Figure 16 is a sectional view of the flap in section plane C1-C1 according to Fig. 15 with a detail X1.
Figure 17 is detail X1 of the sectional view of the flap according to Fig. 16.
Figure 18 is a sectional view of the flap in section plane D1-D1 according to Fig. 15.
Figure 19 is a plane view of the flap from a rotary bearing side.

### Description of Embodiments

In the drawings, like elements are referred to with equal reference numerals. The drawings are merely schematic representations, not intended to portray specific parameters of the embodiments. Moreover, the drawings are intended to depict only typical embodiments and therefore should not be considered as limiting the scope of the embodiments.

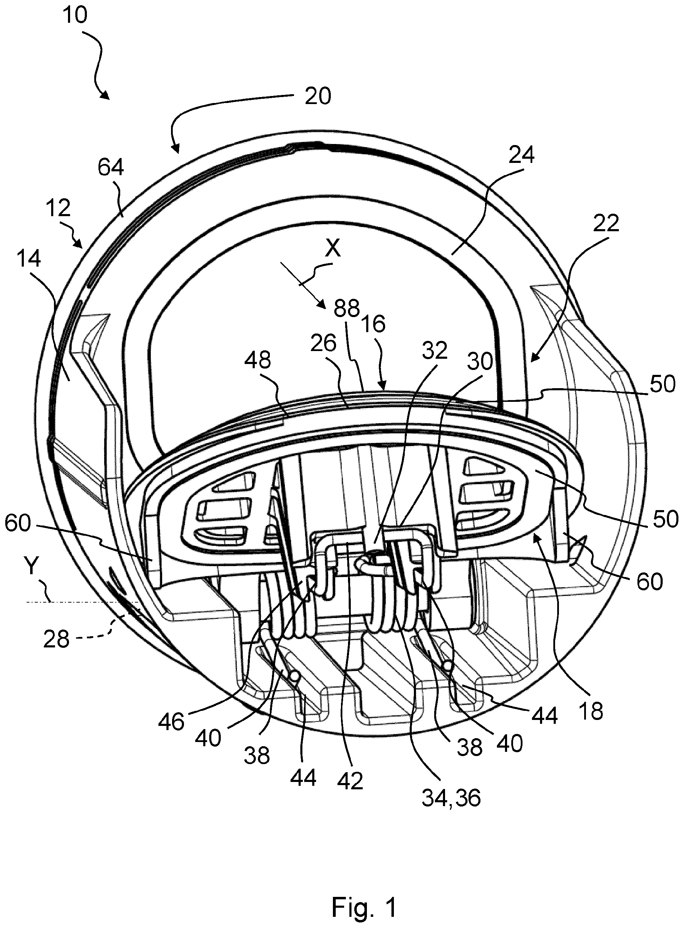

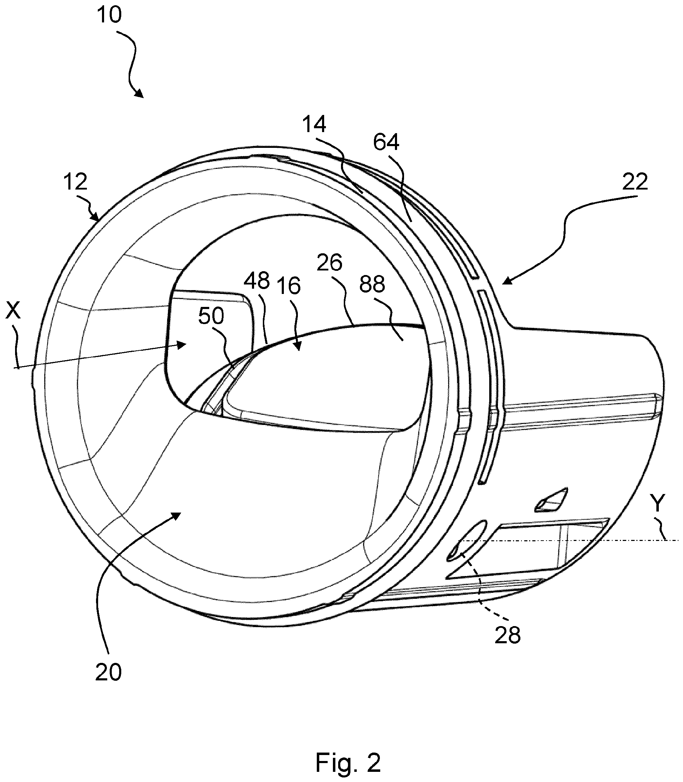

Fig. 1 depicts a check valve 10 according to embodiments in an open state, in an isometric view from a second side 18, whereas in Fig. 2 the check valve is depicted from the first side 16.

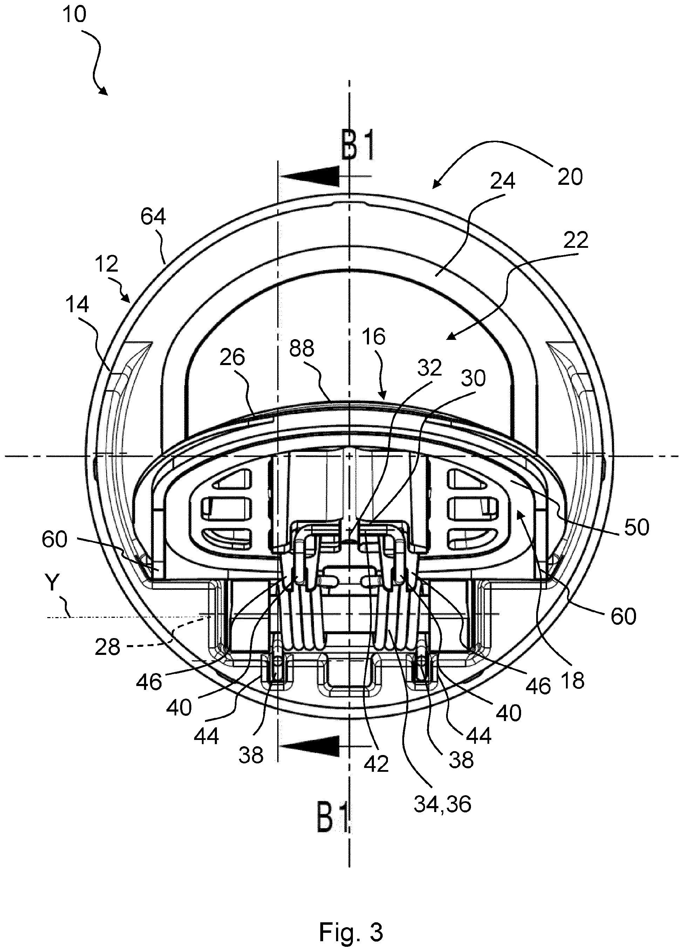

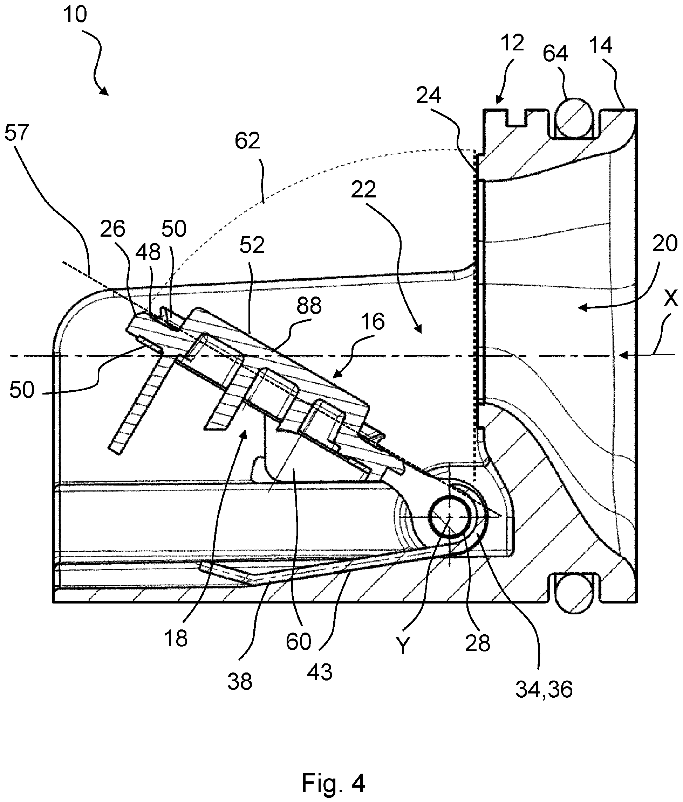

Fig. 3 depicts the check valve 10 in a plane view from the second side 18 with a section plane 81-81, whereas in Fig. 4 a sectional view of the check valve 10 in section plane B1-B1 according to Fig. 3 is shown.

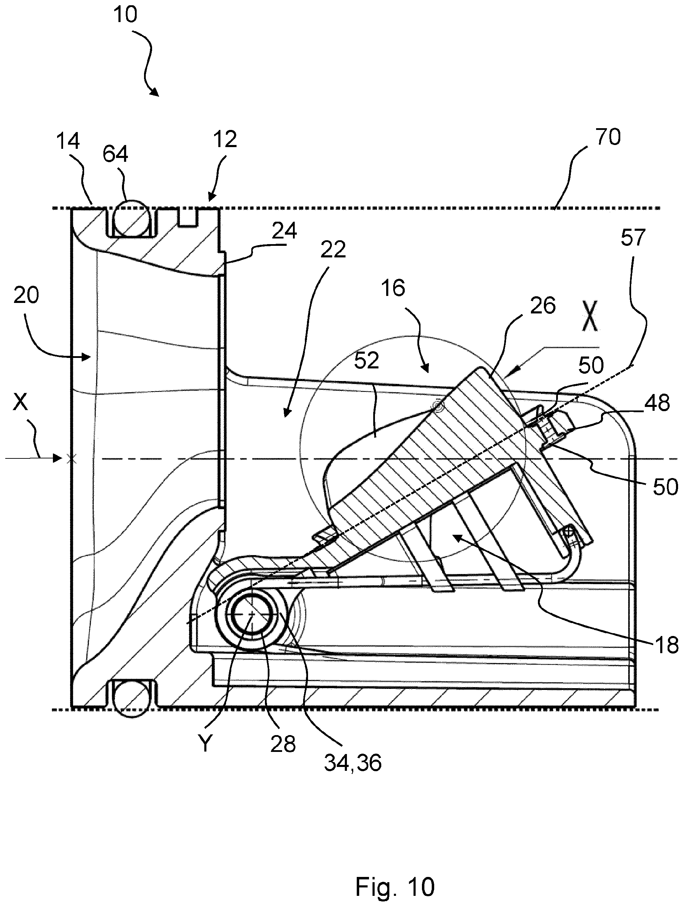

The check valve 10 comprises a housing 12 which is configured for being arranged entirely within a fluid line 70 (as is depicted schematically in Fig. 10). The housing 12 has an outer surface 14 which can be connected to the inside of the fluid line 70 in a fluid tight manner. Therefore the housing 12 is provided by a circumferential seal 64.

The housing 12 further has an inner flow region comprising an inflow region 20 and an outflow region 22.

The housing 12 is configured between the inflow region 20 and the outflow region 22 with a valve seat 24 for receiving a flap 26 in a closed state. The flap 26 is mounted to the housing 12 so as to be pivotable about a rotational axis Y between the closed state and an open state. The flap 26 is provided with a first side 16 facing the inflow region 20 in the closed state of the flap 26 and a second side 18 opposite to the first side 16.

Thus, the flap 26 in the open state enables fluid flow through the check valve 10 from the inflow region 20 to the outflow region 22 along a flow direction X.

Rotary bearings 28 of the flap 26 is arranged in the outflow region 22, wherein a return spring 34 is provided at the second side 18 of the flap 26 in the region of the rotary bearings 28, which exerts a force on the flap 26 in the direction of the closed state.

The return spring 34 is a symmetrical double leg spring 36, wherein two resting legs 38 of the symmetrical double leg spring 36 are supported at the housing 12. For this purpose the housing 12 is provided with lateral guidance elements 44 for the two resting legs 38 of the symmetrical double leg spring 36.

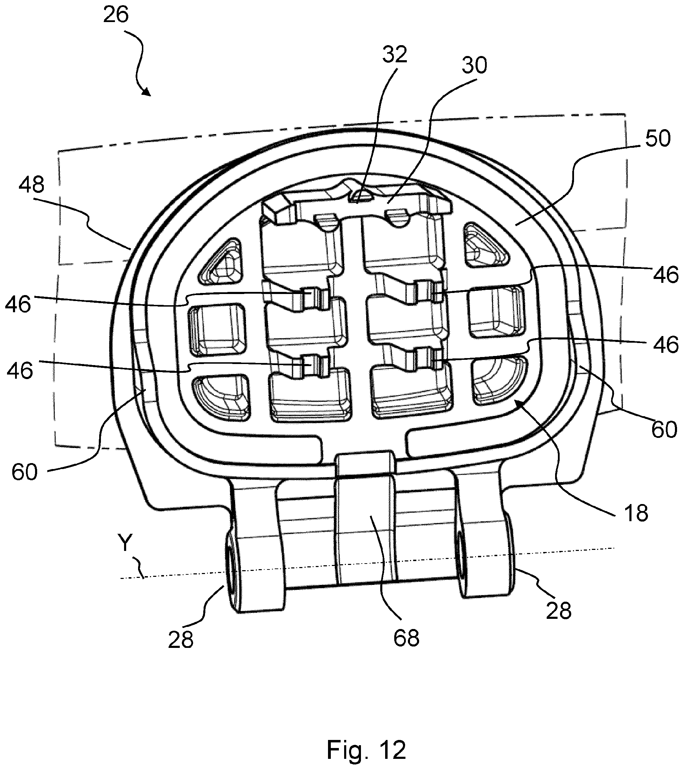

Further, the flap 26 is provided with double-sided guidance elements 46 for two lever arms 40 of the symmetrical double leg spring 36. The guidance elements 46 are in detail to be seen in Fig. 12, where the second side 18 of the flap 26 is shown.

Additionally, the symmetrical double leg spring 36 is provided with a bridge 42 connecting the two lever arms 40. The bridge 42 is supported at a supporting surface 30 arranged at the second side 18 of the flap 26. At least one positioning element 32 is arranged at the supporting surface 30, wherein the bridge 42 of the symmetrical double leg spring 36 is positioned in the at least one positioning element 32. The positioning element 32 is also to be seen in Fig. 12 of the flap 26.

A seal 50 is arranged on a circumference 48 of the first side 16 of the flap 26. The seal 50 is form-fitting on the first side 16 and in particular, the seal 50 is arranged at least partly penetrating the flap 26.

As is particularly to be seen in Fig. 4, the first side 16 of the flap 26 is provided with a planar surface 88. In Fig. 4, the rotation angle 62 for rotating the flap 26 between the open state and the closed state of the check valve 10 is marked. For limiting the rotation angle 62 when rotating the flap 26 into the open state, the second side 18 of the flap 26 is provided with at least one stop element 60, in particular a double-sided stop element, limiting the rotation angle 62 in the open state. The at least one stop element 60 is supported at the housing 12 in the open state. No further rotation of the flap 26 in this direction is possible.

Advantageously, a large contact surface 43 and lateral guidance element 44 on both sides of the two resting legs 38 of the symmetrical double leg spring 36 is achieved. The double leg spring 36 provides a favorable support and force transmission of the double leg spring 36 into the housing 12. Double-sided guidance element 46 on both sides of the two lever arms 40 of the symmetrical double leg spring 36 for optimum lateral support is provided.

The largest possible supporting surface 30 and positioning of the bridge 42 for advantageous force transmission of the forces acting on the spring 36 via the flap 26, caused by the flow of the medium, is favorably enabled.

The stop elements 60 on both sides of the flap 26 against the housing 12 limit the angle 62 of rotation of the flap 26 and thus the load as a bending stress on the double leg spring 36.

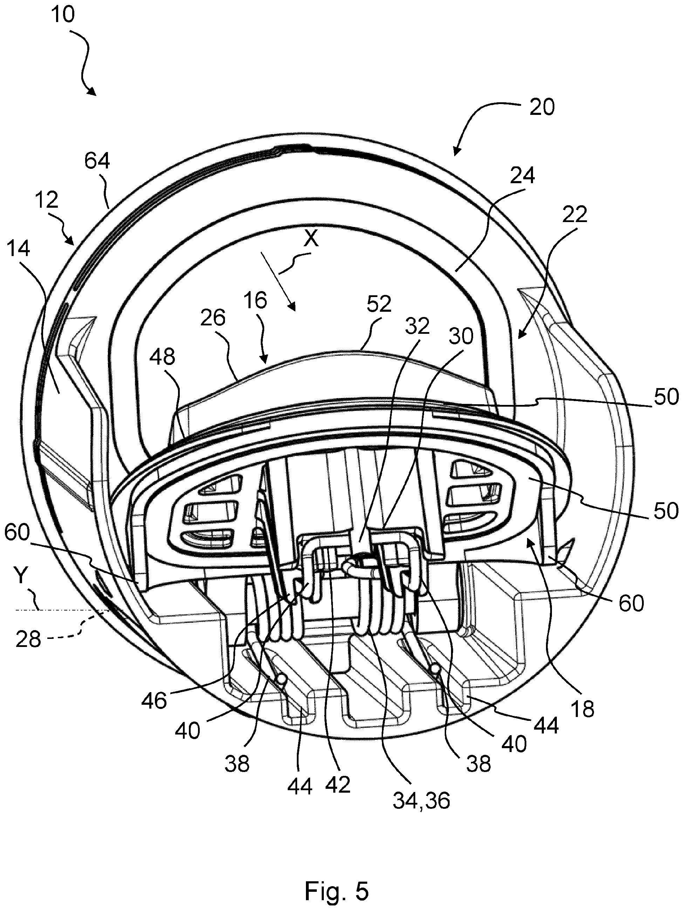

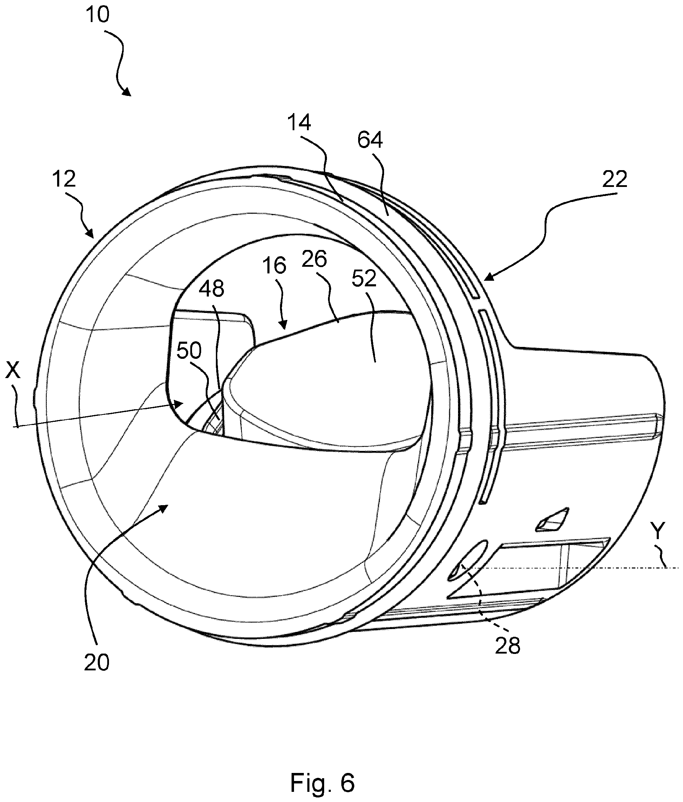

Fig. 5 depicts a check valve 10 according to further embodiments in an open state, in an isometric view from a second side 18, whereas in Fig. 6 the check valve 10 is shown from the first side 16.

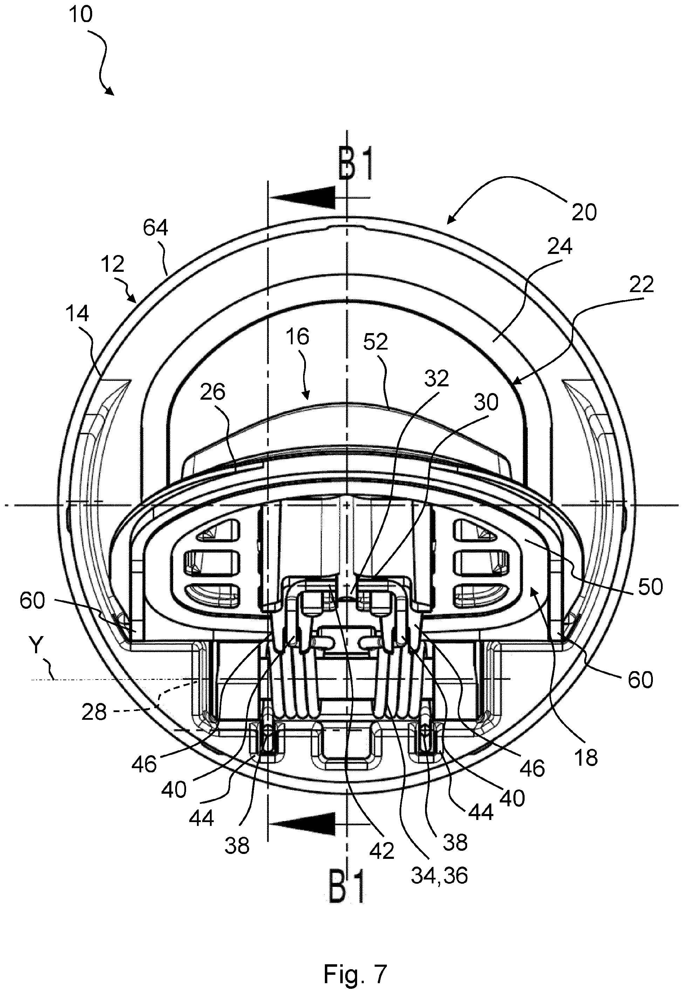

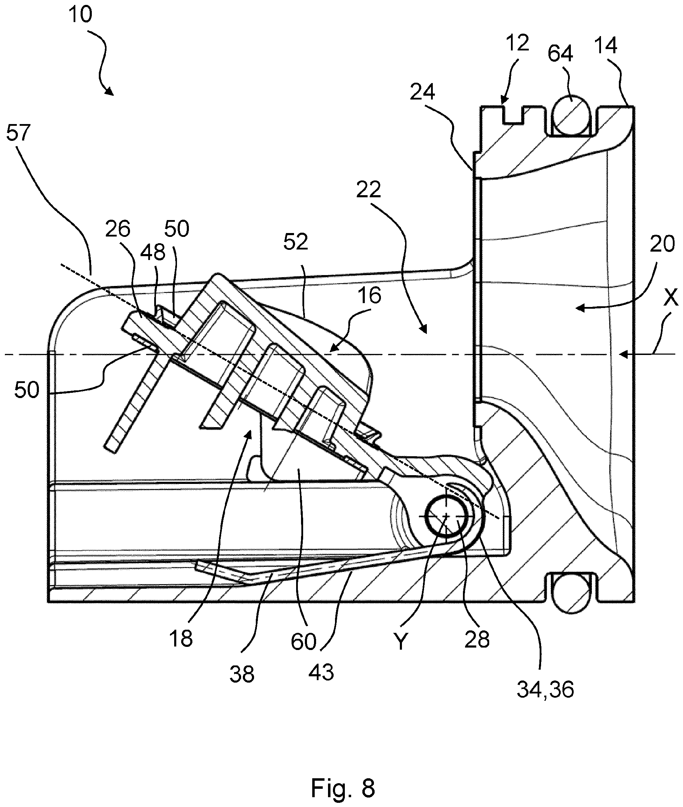

Fig. 7 depicts the check valve 10 in a plane view from the second side 18 with a section plane 81-81, whereas in Fig. 8 a sectional view of the check valve 10 in section plane B1-B1 according to Fig. 7 is shown.

The embodiments shown in Figs. 5 to 8 resembles the embodiments shown in Figs. 1 to 4. The main difference is that the first side 16 of the flap 26 is provided with a guiding surface with a raised contour 52. The raised contour 52 is protruding from the first side 16 in a central region of the flap 26 for guiding the fluid flow away from the seal 50 when flowing in the open state of the check valve 10 through the housing 12 in flow direction X.

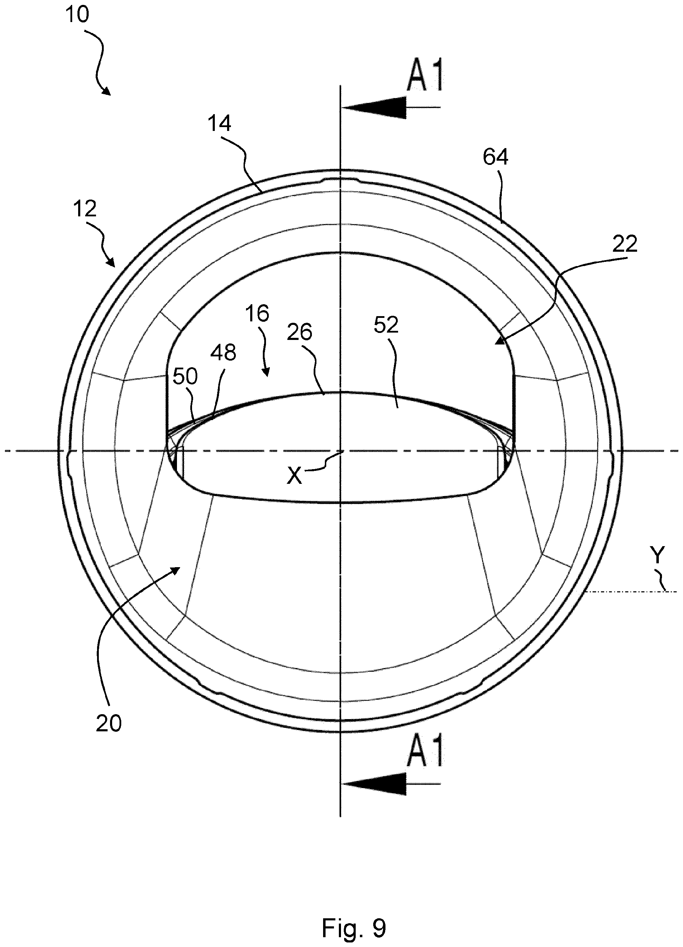

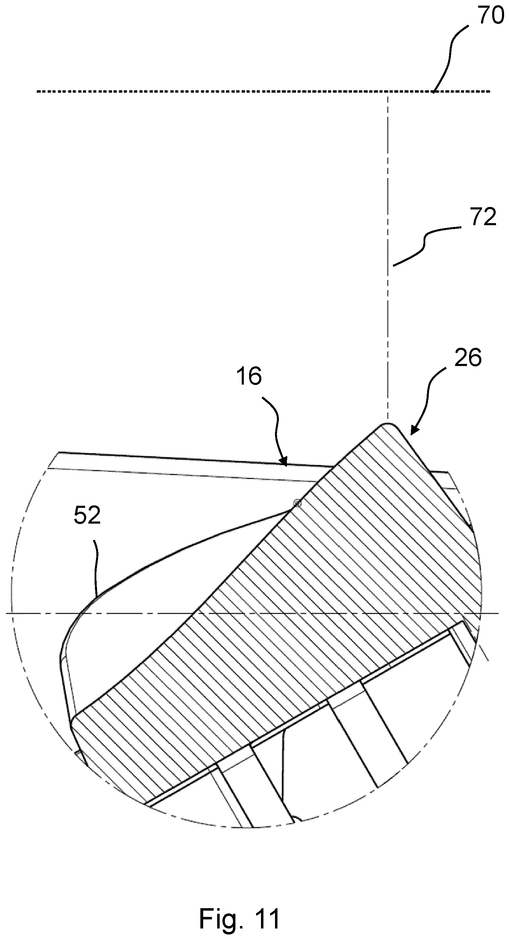

Fig. 9 depicts the check valve 10 according to Fig. 5 in a plane view from the first side 16 with a section plane A1-A1. In Fig. 10 the sectional view of the check valve 10 in section plane A1-A1 according to Fig. 9 with a detail X is depicted. Fig. 11 shows the detail X of the sectional view of the check valve according to Fig. 10.

The shape of the raised contour 52 of the first side 16 of the flap 26 is chosen such that the fluid flow may not harm the seal 50 of the flap 26 which lies in the flow shadow of the raised contour 52.

In the sectional view in Fig. 10 the fluid line 70 is schematically depicted, wherein the check valve is mounted in a fluid tight manner in an interior of the fluid line 70. In Fig. 11 the smallest flow cross section 72 of the fluid line 70 in the range of the check valve 10 is marked.

In Fig. 12 the flap 26 of the check valve 10 according to Fig. 5 is depicted in an isometric view from the second side 18.

In this view the double-sided guidance elements 46 as well as the supporting surface 30 and the positioning element 32 for positioning the double leg spring 36 is to be seen. The seal 50 is arranged on the circumference 48 of the flap 26 penetrating the flap 26 nearly on the whole circumference 48. Only in the region between the rotary bearings 28 there is a solid portion 68 of the flap 26 where the seal 50 is interrupted on the second side 18.

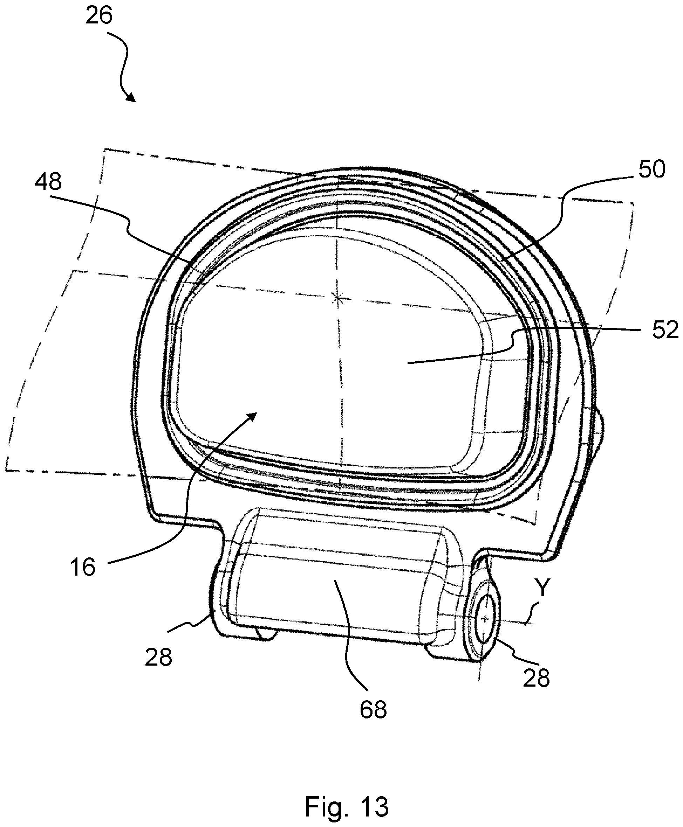

Fig. 13 depicts the flap 26 according to Fig. 12 in an isometric view from the first side 16.

On the first side 16 the seal 50 is arranged on the whole circumference 48 for proper sealing to the valve seat 24 of the housing 12 when closing the check valve 10.

The solid portion 68 between the rotary bearings 28 of the flap 26 prevents fluid flow from streaming below the flap 26. Thus the fluid flow is forced to stream across the raised contour 52 for being advantageously guided by the contour 52. Thus the seal 50 may favorably be protected from harm due to fluid flow.

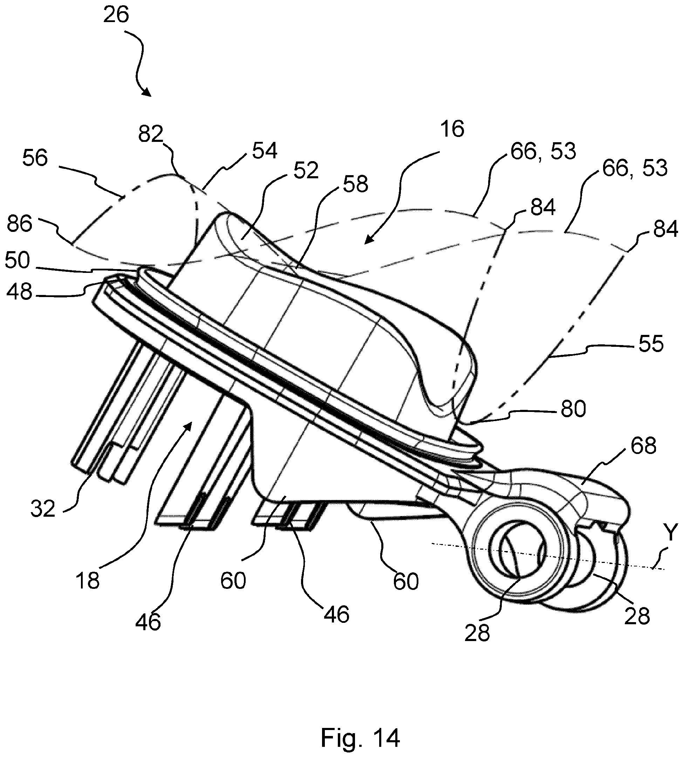

Fig. 14 depicts the flap 26 according to Fig. 12 in a further isometric view where the shape of the contour 52 is seen in more detail.

The contour 52 is shaped according to a concave start contour line 55 with respect to a plane through the first side 16, close to the rotary bearings 28 of the flap 26, and according to a convex end contour line 56 away from the rotary bearings 28 and with a straight transition line 58 in between the concave start contour line 55 and the convex end contour line 56.

The flap 26 is provided with the raised contour 52 running inside the seal 50, which protects the seal 50 from damage due to improper handling, especially during transportation and assembly of the flap as an individual part.

The flap 26 is flow optimized because the flow relevant area of the flap 26 between the two rotary bearings 28 for the rotational axis Y is completely closed by the solid portion 68 to avoid a secondary flow that would cause an additional pressure loss.

The height of this raised contour 52 is to such an extent that the seal 50 on the flap 26 is almost completely shielded from the flow by this geometry even when fully open, and therefore is largely unaffected by the flow and only subjected to a small localized load.

Design of the surface of the raised contour 52 is in the form of a surface which is formed from a starting point 80 which is located comparatively close to the mounting for the rotational axis Y, at which a continuous start contour line 55 as a concave contour line is defined on a plane perpendicular to the corresponding plane 57, parallel to the rotational axis Y, is defined, over one or more continuous guiding contour lines 53 which are defined on the symmetry plane (guiding contour lines 54) or parallel planes (e.g. limiting contour lines 66) up to an end point 82, which is comparatively distant from the rotational axis Y, at which a continuous end contour line 56 as a convex contour line is defined on a plane perpendicular to the corresponding plane 57. Hereby limiting contour lines 66, which are as well guiding contour lines 53, defining the outer end points 84, 86 of the start contour line 55 and the end contour line 56 can also be specified.

Advantageously the surface is defined in such a way that it completely spans the raised contour 52 of the flap 26, so that it does not have to be extrapolated, which means that the start point 80 and end point 82 should not be within the raised contour 52 of the flap 26 and the start contour line 55 and the end contour line 56 should be greater than or equal to the maximum extension of the raised contour 52 in the direction of the rotational axis Y

In the simplest embodiments, the start contour line 55 and end contour line 56 is a straight line and the guiding contour line is a straight line parallel to the corresponding plane 57, resulting in a flat, planar surface 88 with a constant distance to the corresponding plane 57 as the surface of the raised contour 52 as depicted in Fig. 4.

Advantageously, the start contour line 55 and end contour line 56 are concave, deflecting the flow towards the center and therefore away from the sealing areas in the direction of the rotational axis Y of the inner contour of the flow channel.

Particularly advantageous are embodiments in which the central guiding contour line, which is located on the symmetry plane, initially has a concave course and then runs convexly towards the end point 82, whereby the transition is punctual or extends over a flat area, whereby an optimum course of the surface results if the start contour line 55 is also concave and the end contour line 56 is convex.

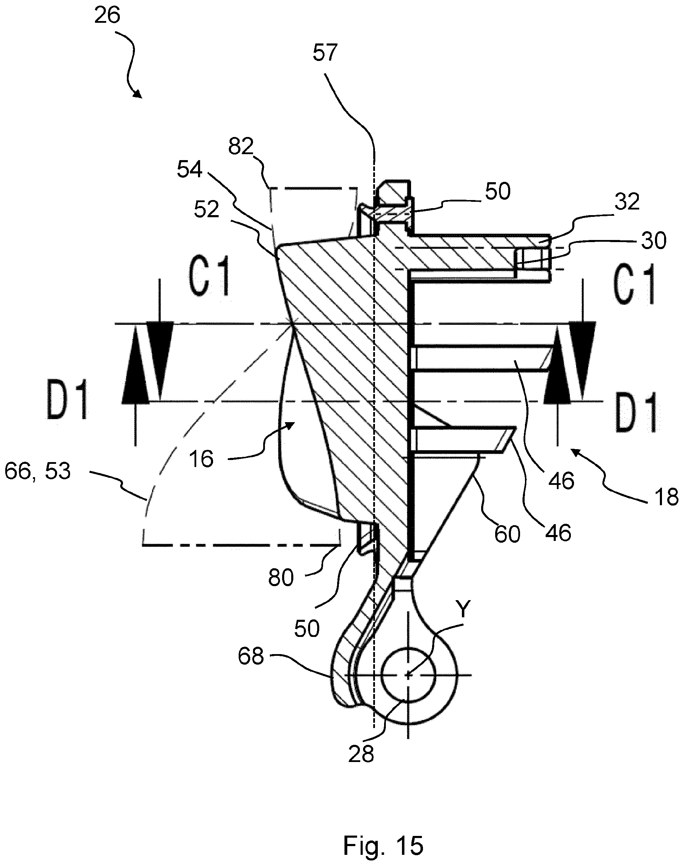

Fig. 15 depicts a sectional view of the flap 26 according to Fig. 12 with section planes C1-C1 and D1-D1.

The shape of the raised contour 52 is to be recognized. Further, the double-sided guidance elements 46 as well as the positioning element 32 protruding from the second side 18 of the flap 26 are to be seen. The seal 50 partly penetrates the flap 26 for favorable and stable fixation at the flap 26.

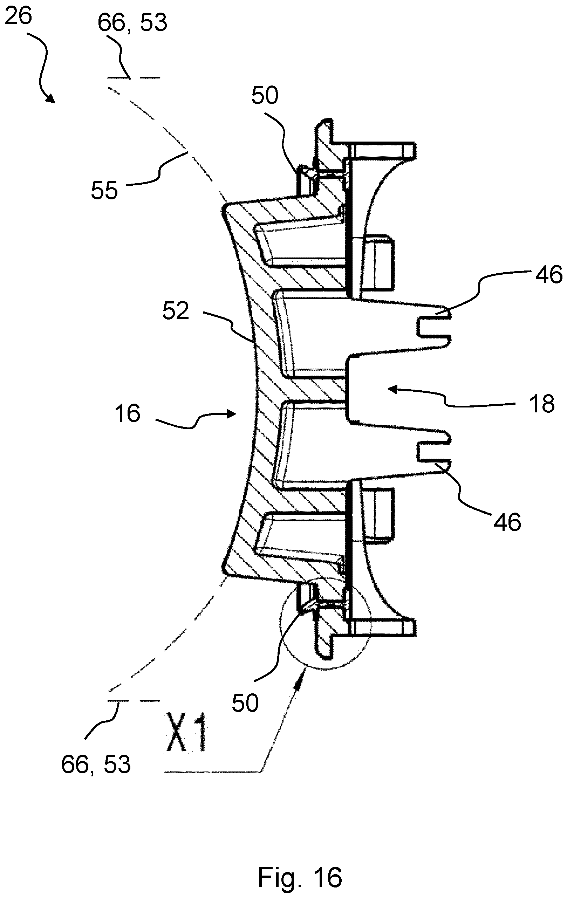

Fig. 16 depicts a sectional view of the flap 26 in section plane C1-C1 according to Fig. 15 with a detail X1.

Here the concave shape of the start contour line 55 is marked. Further, the double-sided guidance elements 46 protruding from the second side 18 of the flap 26 are to be seen.

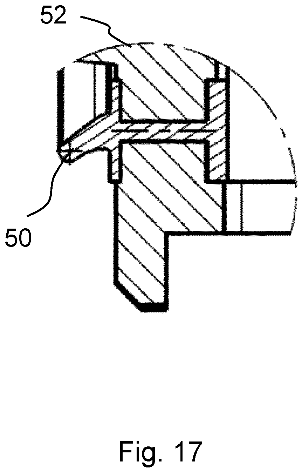

In Fig. 17 with the detail X1 of the sectional view of the flap 26 according to Fig. 16 the seal 50 penetrating the flap 26 is shown.

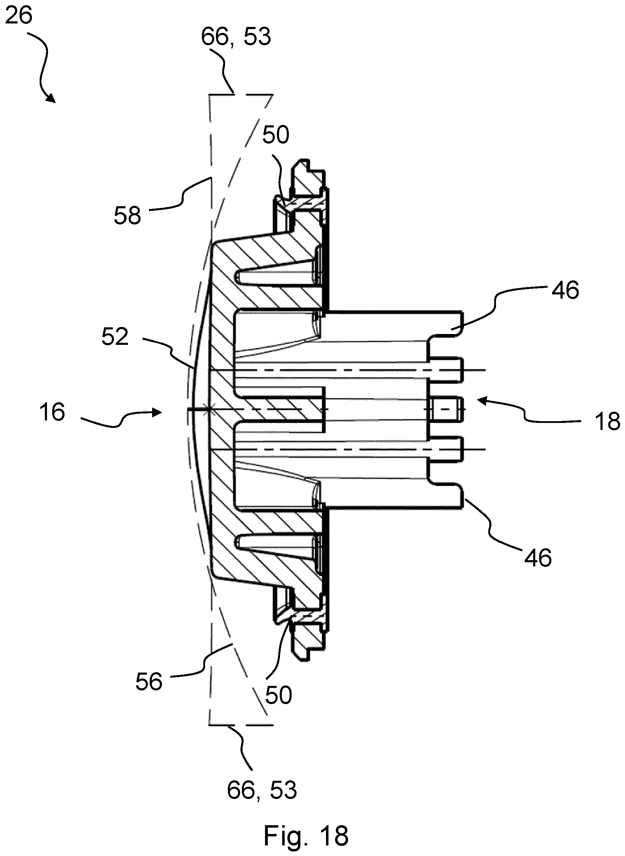

Fig. 18 depicts a sectional view of the flap 26 in section plane D1-D1 according to Fig. 15 showing the convex shape of the end contour line 56.

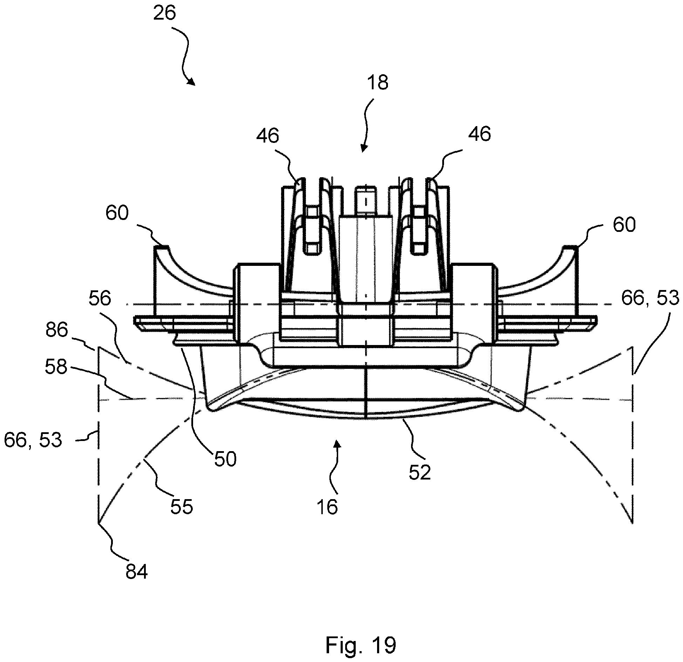

In Fig. 19 a plane view of the flap 26 from a rotary bearing side is depicted showing the concave shape of the start contour line 55 and the convex shape of the end contour line 56.

Further, the stop elements 60 of both lateral sides of the flap 26 for limiting the rotation angle 62 when opening the flap 26 are to be seen.

### Reference Numbers

- 10: check valve
- 12: housing
- 14: outer surface
- 16: first side
- 18: second side
- 20: inflow region
- 22: outflow region
- 24: valve seat
- 26: flap
- 28: rotary bearings
- 30: supporting surface
- 32: positioning element
- 34: return spring
- 36: symmetrical double leg spring
- 38: leg
- 40: arm
- 42: bridge
- 43: contact surface
- 44: lateral guidance element
- 46: double-sided guidance element
- 48: circumference
- 50: seal
- 52: contour
- 53: guiding contour line
- 54: guiding contour line on the symmetry plane
- 55: start contour line
- 56: end contour line
- 57: corresponding plane
- 58: transition line
- 60: stop element
- 62: rotation angle
- 64: seal
- 66: limiting contour line
- 68: solid portion
- 70: fluid line
- 72: flow cross section
- 80: starting point
- 82: end point
- 84: end point concave line
- 86: end point convex line
- 88: planar surface
- X: flow direction
- Y: rotational axis

## Claims

1. A check valve (10) comprising:
a housing (12) configured to be arranged entirely within a fluid line (70), the housing (12) comprising an outer surface (14) configured to be connected to an inside of the fluid line (70) in a fluid tight manner, and an inner flow region comprising an inflow region (20) and an outflow region (22);
a valve seat (24) arranged between the inflow region (20) and the outflow region (22);
a flap (26) mounted to the housing (12) and pivotable about a rotational axis (Y) between a closed state and an open state of the flap (26), the flap (26) comprising a first side (16) facing the inflow region (20) in the closed state of the flap (26) and comprising a second side (18) opposite to the first side (16),
wherein the flap (26) is configured to:
in the closed state, be received by the valve seat (24); and
in the open state, enable flow through the check valve (10) from the inflow region (20) to the outflow region (22) along a flow direction (X), and
wherein the flap (26) further comprises:
rotary bearings (28) arranged in the outflow region (22); and
a return spring (34) arranged at the second side (18) of the flap (26) in a region of the rotary bearings (28) and exerting a force on the flap (26) in a direction of the closed state, the return spring (34) being a symmetrical double leg spring (36) comprising two resting legs (38) supported at the housing (12).

2. The check valve (10) according to claim 1, wherein the housing (12) further comprises lateral guidance elements (44) for the two resting legs (38) of the symmetrical double leg spring (36).

3. The check valve (10) according to claim 1 or 2, wherein the flap (26) further comprises double-sided guidance elements (46) for two lever arms (40) of the symmetrical double leg spring (36).

4. The check valve (10) according to any one of the preceding claims, wherein the flap (26) further comprises a supporting surface (30) arranged at the second side (18) of the flap (26), and
wherein the symmetrical double leg spring (36) further comprises a bridge (42) connecting two lever arms (40) of the symmetrical double leg spring (36), the bridge (42) being supported at the supporting surface (30).

5. The check valve (10) according to claim 4, further comprising at least one positioning element (32) arranged at the supporting surface (30),
wherein the bridge (42) of the symmetrical double leg spring (36) is positioned in the at least one positioning element (32).

6. The check valve (10) according to any one of the preceding claims, wherein the flap (26) further comprises a seal (50) arranged on a circumference (48) of the first side (16) of the flap (26).

7. The check valve (10) according to claim 6, wherein the seal (50) is form-fitting on the first side (16) of the flap (26), and
wherein the seal (50) is at least partly penetrating the flap (26).

8. The check valve (10) according to claim 6, wherein the first side (16) of the flap (26) comprises a planar surface (88) spaced apart from a corresponding plane (57) of the flap (26) to form a raised contour (52) inside the seal (50), the raised contour (52) being configured to protect the seal (50) from damage due to improper handling.

9. The check valve (10) according to claim 6, wherein the first side (16) of the flap (26) comprises a guiding surface comprising a raised contour (52) protruding from the first side (16) in a central region of the flap (26), the raised contour (52) being configured to guide a fluid flow away from the seal (50).

10. The check valve (10) according to claim 9, wherein the raised contour (52) is shaped according to a concave start contour line (55) defined on a plane substantially perpendicular to a corresponding plane (57) of the flap (26), parallel to the rotational axis (Y), and close to the rotary bearings (28), and according to a convex end contour line (56) away from the rotary bearings (28) and with a straight transition line (58) in between the concave start contour line (55) and convex end contour line (56).

11. The check valve (10) according to any one of the preceding claims, wherein the second side (18) of the flap (26) comprises at least one stop element (60) configured to, in the open state of the flap (26), limit a rotation angle (62) of the flap (26) by being supported at the housing (12).

12. The check valve (10) according to any one of the preceding claims, wherein the flap (16) further comprises a solid portion (68) arranged between the rotary bearings (28) and configured to prevent a fluid flow from streaming below the flap (26).
